(19) Europäisches Patentamt / European Patent Office / Office européen des brevets

(11) **EP 2 515 157 A1**

(12) **EUROPEAN PATENT APPLICATION**

(43) Date of publication:
**24.10.2012 Bulletin 2012/43**

(51) Int Cl.:
**G02B 27/01** (2006.01)     **G02B 6/42** (2006.01)

(21) Application number: **11275062.5**

(22) Date of filing: **18.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems Plc**
**London SW1Y 5AD (GB)**

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **A projection display device**

(57)     The present invention provides a projection display 10, for displaying an image to a viewer. An image-providing light source device 60 is arranged to inject an input pupil 61 of multi-spectral image bearing light into a waveguide assembly. The waveguide assembly 50 comprises first and second diffraction regions arranged respectively for expanding the input pupil in first and second generally orthogonal dimensions and outputting an exit pupil 54 expanded in the first and second dimensions from the waveguide assembly. The diffractive regions of the waveguide assembly are matched to cause zero or substantially zero net chromatic aberration. A combiner 16 is arranged to direct the exit pupil towards a viewer for viewing an image 18 and to transmit light from a real world scene 52 through the combiner so that the image overlays the light from the real world scene.

FIG. 3

EP 2 515 157 A1

**Description**

This invention relates to a projection display for displaying an image to a viewer which is particularly, but not exclusively, suitable for use in a head up display.

Traditionally head up displays, which may be used in an aircraft or other vehicle, use a conventional spherical lens system to generate a collimated display from an image provider such as a cathode ray tube. The light rays emanating from the spherical lens system are reflected by a conventional fold mirror through a spherical exit lens system and from there passed to a combiner from which the image is reflected to provide a collimated display to the viewer such as a pilot of an aircraft or operator of a vehicle. Thus with these conventional displays the collimating optics used, that is the spherical lens system and spherical exit lens system, are large and bulky, which may limit the use of such a head up display in a cockpit area with insufficient space to accommodate such a head up display.

More recently, the use of one or more waveguides have been employed to project an image to a user. The present applicant has disclosed such waveguide displays in earlier patent applications WO2007/029032, WO2007/029034 and WO2010/119240 the content of which is incorporated herein by reference. In these earlier waveguide displays a relatively small input pupil is generated using a micro display and coupled into at least one waveguide. The input pupil is stretched in two generally orthogonal directions by respective diffraction regions and output from a waveguide as a larger exit pupil for viewing by a user. One advantage of waveguide displays is that they occupy less space and are therefore more suitable for use in space limited environments.

WO2007/029032 discloses the use of two so-called plate-like waveguides. The input pupil is coupled into a first waveguide and propagates by total internal reflection along the waveguide reflecting between each of two opposed and parallel sides of the generally rectilinear waveguide. A grating is arranged to stretch the input pupil in one dimension in the direction of propagation and output it from the first waveguide. The light is coupled into a second waveguide and propagates by total internal reflection along the second waveguide reflecting between each of two opposed and parallel sides of the generally rectilinear second waveguide. A further grating is arranged to stretch the pupil in a second dimension, generally orthogonal to the first direction and in the direction of propagation. Accordingly when the grating outputs the exit pupil from the second waveguide it is larger in both first and second dimensions and can be viewed easily by a user.

WO2007/029034 discloses the use of a first rod-like waveguide and a second plate-like waveguide. The input pupil is coupled into a first waveguide and propagates by total internal reflection along the waveguide reflecting in sequence from each of the four perpendicular sides of the generally rectilinear waveguide. This somewhat spiral propagation of the light distinguishes a rod-like waveguide from a plate-like waveguide and is useful for reducing the size of the waveguide display. A diffraction region is arranged to stretch the input pupil in one dimension and output it from the first waveguide. Similarly to WO2007/029032, the light is coupled into a second plate-like waveguide and propagates by total internal reflection along the second waveguide reflecting between each of two opposed and parallel sides of the generally rectilinear second waveguide. A further diffraction region is arranged to stretch the pupil in a second dimension, generally orthogonal to the first direction and in the direction of propagation. Accordingly when the diffraction region outputs the exit pupil from the second waveguide it is larger in both first and second dimensions and can be viewed easily by a user.

WO2010/119240 discloses the use of a single plate-like waveguide which expands the input pupil in both first and second dimensions. An advantage of this arrangement is that it does not require two waveguides to be accurately fixed in relative orientation and the gratings can be formed in more accurate alignment. In a similar way to the two waveguides displays above, an input pupil is coupled into the waveguide and stretched in one dimension by a first grating region and in the second dimension by a second grating region which outputs the expanded exit pupil from the waveguide for viewing by a user.

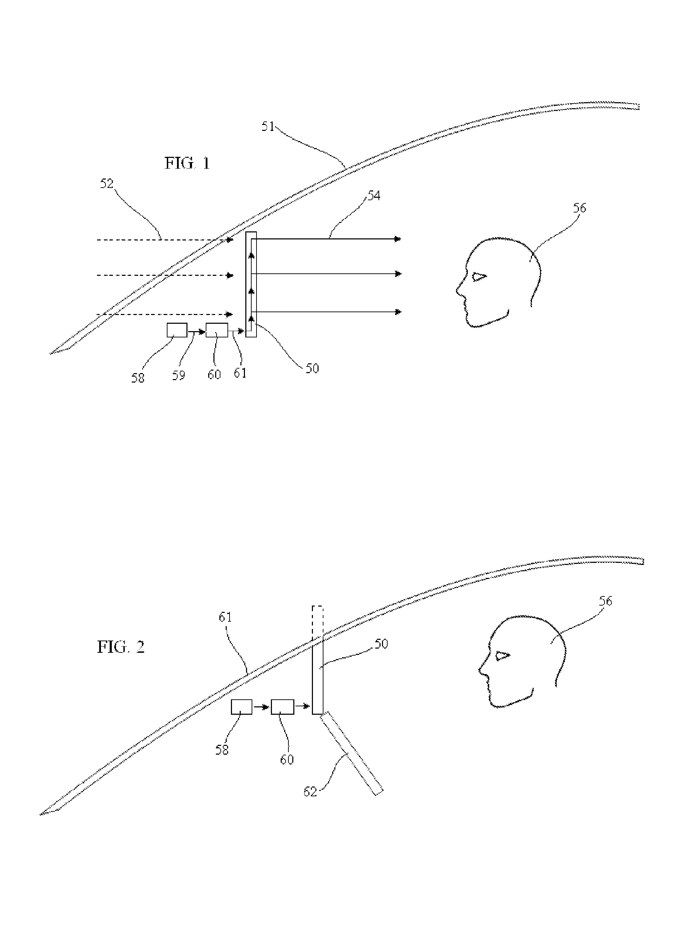

A waveguide display according to any one of the three described displays is shown schematically in Figure 1. The display comprises a waveguide assembly 50 having at least one waveguide which both presents the desired display to the user 56 whilst also allowing the outside world to be viewed through the waveguide. The user is located in this Figure in a cockpit of an aircraft having a transparent canopy 51. It is a distinct advantage of waveguide displays that one of the waveguides acts as a combiner in addition to expanding the pupil because this results in a more compact device with fewer parts. The user may continue to observe the light 52 from the outside world scene which is transmitted through combiner and also view the light of the exit pupil 54 which is output the waveguide assembly towards the user to overlay the outside world scene.

Also shown is an image processor 58 which generates an image signal 59 and outputs it to a micro-display 60. In order to produce a colour, or multi-spectral image, the micro-display may comprise a multi-spectral light source that illuminates a display, which may for example be transmissive or reflective, and outputs collimated image bearing light 61 comprising a plurality of wavelengths for coupling into the waveguide assembly 50.

Whilst the above described waveguide displays provide a compact display solution in limited space environments, especially in aircrafts cockpits where there is a desire to decrease the required space for a display, the trend in aircraft design is to incorporate large panoramic canopies as shown in Figure 2. However, a waveguide assembly using a multi-spectral light source such as an LED has a range of output angles towards the user which are arranged around 90° to the plane of the combiner waveguide. The perpendicular orientation is a necessary constraint of the design to avoid colour aberration. In this case, there is insufficient space to provide a display of adequate size as emphasised in Figure 2 with the use of broken lines. It will also be appreciated that in some environments such as in a cockpit, a pilot may require a heads-down display 62 in a convenient position for viewing, which additionally reduces the available space for a head-up display.

The present invention aims to provide an improved display.

The present invention provides a projection display, for displaying an image to a viewer, including an image-providing light source device arranged to inject an input pupil of image bearing light into a waveguide assembly, the waveguide assembly comprising first and second diffraction regions arranged respectively for expanding the input pupil in first and second generally orthogonal dimensions and outputting an exit pupil expanded in the first and second dimensions from the waveguide assembly, and a combiner arranged to direct the exit pupil towards a viewer for viewing an image and to transmit light from a real world scene through the combiner so that the image overlays the light from the real world scene.

The image-providing light source device may be arranged to inject an input pupil of multi-spectral image bearing light into a waveguide assembly, the waveguide assembly and the diffractive regions of the waveguide assembly are matched to cause zero or substantially zero net chromatic aberration.

The first or the second diffraction region may serve as an output diffraction region located in a waveguide of the waveguide assembly and the output region is arranged to output the exit pupil from the waveguide assembly at an angle which is perpendicular to a plane of the waveguide.

The combiner may have a generally planar surface which is orientated at an angle relative to the plane of the waveguide to direct the exit pupil towards the viewer.

The exit pupil may comprise a plurality of wavelengths and the planar surface of the combiner may be configured generally to reflect the multi-spectral light of the exit pupil and generally to transmit light from said real world scene.

The combiner may comprise a reflective coating selected to be reflective for the light of the exit pupil and transmissive to light from an outside world scene.

The combiner may comprise an anti-reflection coating for increasing the transmission efficiency of light from an outside world scene through the combiner.

The waveguide assembly may comprise a plate-like waveguide along which the image-bearing light can propagate by total internal reflection between opposing and parallel sides of the waveguide and having said first and said second diffraction regions, said first region being for diffracting the image-bearing light so as to expand it in the first dimension and said second diffraction region being for further diffracting the image-bearing light so as to expand it in the second dimension and for releasing it from the waveguide as the exit pupil.

Alternatively, the waveguide assembly may comprise a first plate-like waveguide along which the image-bearing light can propagate by total internal reflection between opposing and parallel sides of the waveguide and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

In another arrangement, the waveguide assembly may comprise a first rod-like waveguide along which the image-bearing light can propagate by total internal reflection from each of the four sides of the waveguide in turn and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

An aircraft or vehicle comprising a transparent canopy or windshield, a seat for an occupant, and a projection display as claimed in any of the preceding claims, wherein the combiner is located to allow an occupant seated in the seat to see an outside world scene through the combiner with an image generated by the display overlaying the outside world scene. The combiner may be incorporated in the canopy or windshield if it is sufficiently reflective and optically flat.

The projection display may form part of a Head Up Display, particularly for use on an aircraft or vehicle.

The invention will now be described by way of example only, with reference to the accompanying drawings, in which:

Figure 1 is a schematic illustration of a prior art waveguide display in the form of a head up display.

Figure 2 is a similar schematic illustration as shown in Figure 1 showing the problem with known displays in a space restricted environment;

Figure 3 is a schematic illustration of a projection display according to an embodiment of the present invention;

Figure 4 shows three views of one arrangement of a waveguide assembly for the display shown in Figure 3; and

Figure 5 shows a section of a combiner for the display shown in Figure 3.

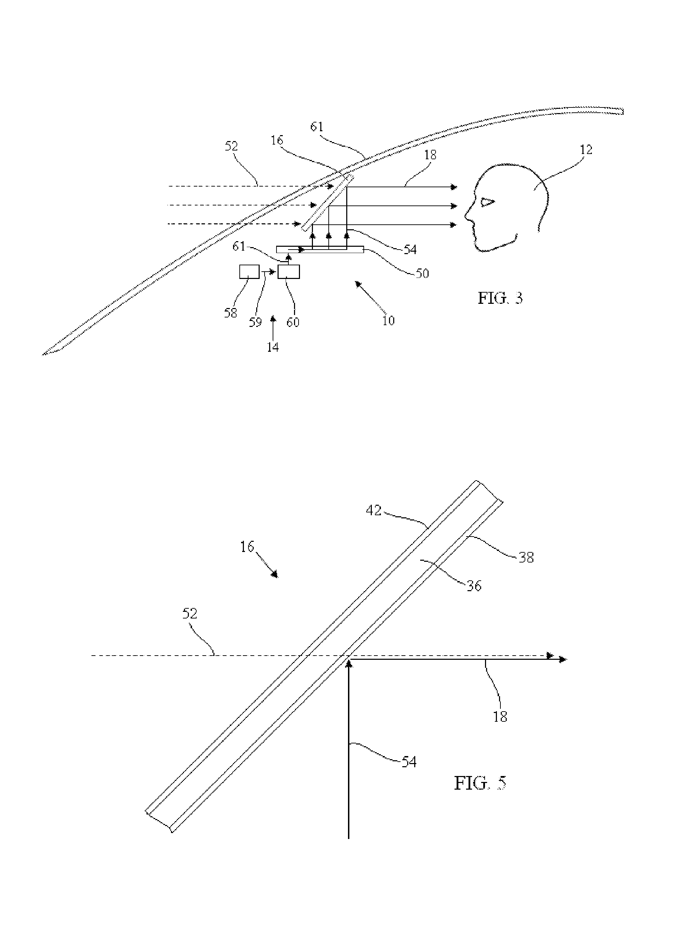

Referring to Figure 3, a projection display 10 is shown for displaying an image to a viewer 12. The display comprises a waveguide assembly 50 as discussed above and as disclosed in detail in our earlier patent applications WO2007/029032, WO2007/029034 and WO2010/119240, together with an image-providing light source arrangement 14 comprising image processor 58 and display device 60 also as discussed above. The arrangement 14 injects an input pupil 61 of multi-spectral image bearing light into the waveguide assembly. The waveguide assembly comprises a plurality of diffraction gratings discussed in more detail below arranged for coupling light into the assembly, expanding the input pupil in first and second generally orthogonal dimensions and outputting an exit pupil 54 expanded in the first and second dimensions from the waveguide assembly. A combiner 16 is arranged to direct the exit pupil 54 towards a viewer 12 for viewing an image 18 and to transmit light 52 from a real world scene through the combiner so that the image overlays the light from the real world scene.

The use of a combiner with a waveguide assembly is counter-intuitive since the assembly already has a built-in combiner in the form of an output waveguide. However, as discussed herein the additional combiner provides advantages for projection of multi-spectral light not realised in known projector apparatus. It will additionally be appreciated that the physical size of a waveguide display is smaller than previous lens incorporating displays and therefore depending on space requirement it may be desirable to us a combiner with a waveguide display for displaying mono-chromatic images.

The first or the second diffraction grating serves as an output grating located in a waveguide of the waveguide assembly and the output grating is arranged to output the exit pupil from the waveguide assembly at an angle which is generally perpendicular to a plane of the waveguide.

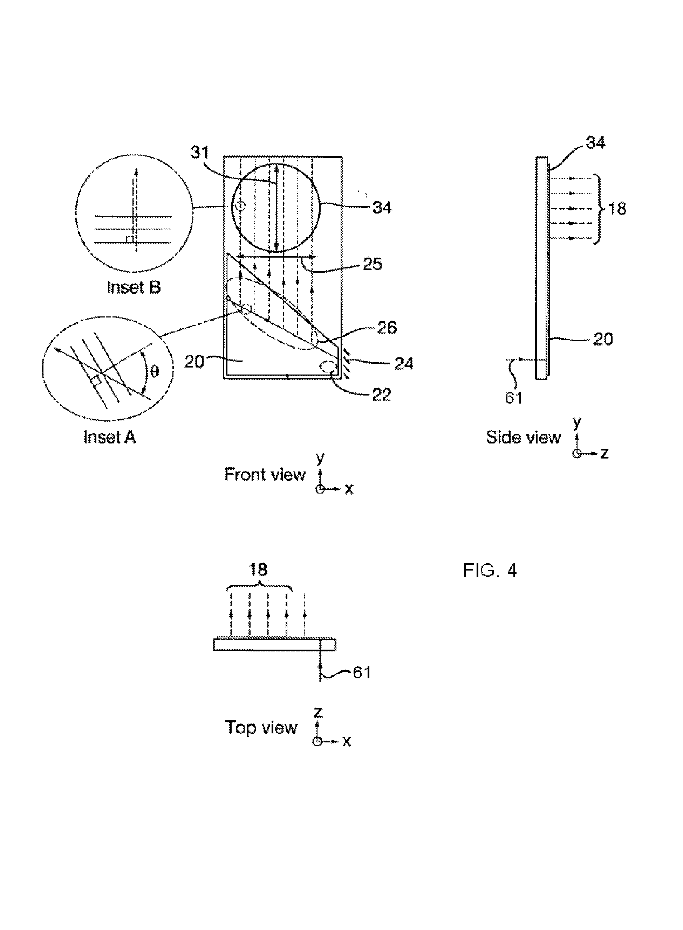

Figure 4 shows a waveguide assembly 50 having a single waveguide 40 as described in WO2010/119240 and having diffraction regions 26, 34 arranged respectively for expanding the input pupil in first and second dimensions 25, 31. This example also includes a first, input, diffraction region 22 for coupling the input pupil into the waveguide for propagation by total internal reflection. The first diffraction region 22 and the second diffraction region 26 are formed by the same grating 20. The third diffraction region 34 is formed by another grating. In use, an input pupil 61 is coupled into the waveguide and directed towards reflective surface 24 where it is reflected towards the second diffraction region 26. The second diffraction region expands the pupil in a first dimension 25 and turns it towards the third diffraction region 34. The third diffraction region expands the pupil in a second dimension 31 and outputs it from the waveguide as exit pupil 54.

In more detail, the orientation of the grooves of the grating 20 are inclined at an angle of 60° to the x-axis so that image-bearing light incident on the input part 22 is diffracted and propagated to the reflective surface 24 and thence reflected so that the chief ray propagates and is incident on the grooves of the turning region at 30° to the normal to the grooves, inset A). The light is partially diffracted and expanded in a first dimension (here the x-dimension) and propagates through the waveguide to a low diffraction efficiency (2% to 20%) grating 34 having its orientation (grooves) lying in the x-direction. The diffracted rays are incident normally on this grating (inset B) and are partially diffracted out of the waveguide, the partial diffraction expanding the pupil in a second dimension, here the y-dimension.

A diffractive surface can exhibit large amounts of dispersion of incident light. This can result in light rays having the same or similar field angles, but which differ in wavelength, being diffracted into different angles into, within or from a waveguide, causing potentially large amounts of chromatic aberration at an output of a projection display. However, if the dispersion associated with an input grating to a waveguide is substantially matched in an opposing sense with the dispersion associated with an output grating from the waveguide, then the net chromatic dispersion will approach or substantially equal zero. The correct matching of the diffractive gratings of the waveguide assembly has the effect of mitigating chromatic aberration. In the Figure 4 waveguide assembly the net chromatic aberration caused by the three diffraction regions must be zero or substantially zero. For example, the grating 20 of the first and second diffractive regions must be matched with the grating of the third diffractive region to provide a net chromatic dispersion of substantially zero. This result is advantageous for projection displays used in head mounted or helmet mounted applications that incorporate waveguides as it allows the use of a small, cheap and broadband image generating light source in place of a relatively costly, bulky and high powered monochromatic light source, for example a laser, to illuminate the waveguides. Such a result also allows the projection display to correctly present multiple colour or full colour display information to a viewer.

For the waveguides described herein, a first diffraction grating may have a grating region which can be used to couple the light into the waveguide with a second grating having two grating regions which can be used to stretch the input pupil and output it from the waveguide. Alternatively, a first diffraction grating may have two grating regions which can be used to couple the light into the waveguide and stretch the input pupil in a first dimension with a second diffraction grating having a grating regions used to stretch the input pupil in the second dimension and output it from the waveguide. It can be shown that the output angle $\theta_o$ is related to the input angle $\theta_i$ by the equation:

$$\sin(\theta_o) = \lambda(1/d_i - 1/d_o) + \sin(\theta_i)$$

Where $d_i$ and $d_o$ are the periods of the input and output gratings respectively. Accordingly, if the fringe periods of the gratings are the same, lambda cancels and $\theta_o$ equals $\theta_i$. Thus the grating periods must be matched to avoid chromatic aberration for light sources other than monochromatic sources such as a laser. It will be appreciated that if it is required to match the gratings in this way to avoid chromatic aberration, light must be output from the waveguide assembly generally perpendicularly and this being the case, it is not possible to match the gratings and also output the light at an angle other than generally 90 degrees. Therefore, it will be seen that even though the waveguide assembly comprises a built-in combiner, the built-in combiner cannot be angled relative to the viewer. That is, if the projection apparatus is to be located in a space limited environment, the built-in combiner cannot be orientated selectively to occupy the space most efficiently. However, in the present invention, the additional combiner can be orientated to occupy space efficiently and therefore the invention provides a noticeable advantage.

Figure 5 shows a section taken through the combiner 16. The combiner comprises an optically transparent planar substrate 36 typically made from glass. An optically reflective coating 38 is provided on one surface of the substrate. The coating may be a multi-later dielectric coating having thicknesses and dielectric properties selected to be reflective to wavelengths present in the multi-spectral light of the exit pupil 54 output from the waveguide assembly 50 but transmissive to wavelengths in light 52 from an outside world scene. An anti-reflective layer 42 is provided on an opposing surface of the substrate configured to increase the transmission efficiency of light 52 through the combiner. The anti-reflective layer may for example have a thickness of a quarter wavelength designed to produce interference to allow greater transmission.

The wavelength selective coating on the combiner improves efficiency by increasing the reflectance of the wavelengths used by the display whilst also allowing transmission of the outside world scene. A neutral density coating could also be used but would not be as efficient. In some arrangements, the windshield or canopy 61 can be used as the combiner if it provides adequate reflection and is optically flat.

Referring again to Figure 3, the combiner is orientated at an angle relative to the plane of the waveguide to direct the exit pupil towards the viewer. In the example shown the combiner is orientated at about 45° to the plane of the waveguide, although it will be appreciated that other angles may be appropriate depending on the relative orientations of the waveguide assembly, the combiner and the viewer. For instance, the waveguide assembly may be angled away from the viewer and in which case the combiner may be orientated at less than 45° to the plane of the waveguide assembly. It will be appreciated that the orientation of the combiner can match more closely the angle of the windscreen that is possible with the use of a waveguide assembly without combiner as shown in the earlier patent applications. That is, from the perspective of the viewer, the part of the windshield through which the light 52 travels is angled away from the viewer at angle of about 30° to the horizontal. The combiner is angled away from the viewer by about 45° to the horizontal. A waveguide assembly without combiner would be angled at 90° to the horizontal. Accordingly, the display 10 may be more compact.

The combiner may be mounted in a fixed orientation to the waveguide assembly in any suitable way for example it may be mounted to waveguide assembly or another part of aircraft or vehicle or if part of an aircraft canopy is fixed, it may mounted to that part of the canopy.

The waveguide assembly in Figure 4 may be modified in another embodiment of the invention and as disclosed in detail in W02007/029032. This waveguide assembly comprises a first plate-like waveguide along which the image-bearing light can propagate by total internal reflection between opposing and parallel sides of the waveguide and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

The waveguide assembly in Figure 4 may also be modified in a further embodiment of the invention and as disclosed in detail in W02007/029032. This waveguide assembly comprises a first rod-like waveguide along which the image-bearing light can propagate by total internal reflection from each of the four sides of the waveguide in turn and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

The projection display illustrated according to the invention can form part of a Head Up Display, particularly for aircraft usage.

**Claims**

1. A projection display, for displaying an image to a viewer, including an image-providing light source device arranged to inject an input pupil of image bearing light into a waveguide assembly, the waveguide assembly comprising first and second diffraction regions arranged respectively for expanding the input pupil in first and second generally orthogonal dimensions and outputting an exit pupil expanded in the first and second dimensions from the waveguide assembly, and a combiner arranged to direct the exit pupil towards a viewer for viewing an image and to transmit light from a real world scene through the combiner so that the image overlays the light from the real world scene.

2. A projection display as claimed in claim 1, wherein said image-providing light source device is arranged to inject an input pupil of multi-spectral image bearing light into a waveguide assembly, the waveguide assembly and the diffractive regions of the waveguide assembly are matched to cause zero or substantially zero net chromatic aberration.

3. A projection display as claimed in claim 1 or 2, wherein the first or the second diffraction region serves as an output diffraction region located in a waveguide of the waveguide assembly and the output region is arranged to output the exit pupil from the waveguide assembly at an angle which is perpendicular to a plane of the waveguide.

4. A projection display as claimed in claim 3, wherein the combiner has a generally planar surface which is orientated at an angle relative to the plane of the waveguide to direct the exit pupil towards the viewer.

5. A projection display as claimed in claim 3 or 4, wherein the exit pupil comprises a plurality of wavelengths and the planar surface of the combiner is configured generally to reflect the multi-spectral light of the exit pupil and generally to transmit light from said real world scene.

6. A projection display as claimed in claim 5, wherein the combiner comprises a reflective coating selected to be reflective for the light of the exit pupil and transmissive to light from an outside world scene.

7. A projection display as claimed in claim 5 or 6, wherein the combiner comprises an anti-reflection coating for increasing the transmission efficiency of light from an outside world scene through the combiner.

8. A projection display as claimed in any of the preceding claims, wherein the waveguide assembly comprises a plate-like waveguide along which the image-bearing light can propagate by total internal reflection between opposing and parallel sides of the waveguide and having said first and said second diffraction regions, said first region being for diffracting the image-bearing light so as to expand it in the first dimension and said second diffraction region being for further diffracting the image-bearing light so as to expand it in the second dimension and for releasing it from the waveguide as the exit pupil.

9. A projection display as claimed in any of claims 1 to 7, wherein the waveguide assembly comprises a first plate-like waveguide along which the image-bearing light can propagate by total internal reflection between opposing and parallel sides of the waveguide and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

10. A projection display as claimed in any of claims 1 to 7, wherein the waveguide assembly comprises a first rod-like waveguide along which the image-bearing light can propagate by total internal reflection from each of the four sides of the waveguide in turn and having said first diffraction region for diffracting the image-bearing light so as to expand it in the first dimension and a second plate-like waveguide along which the image-bearing can propagate by total internal reflection between opposing and parallel sides of the waveguide and having said second diffraction region for further diffracting the image-bearing light so as to expand it in the second dimension and for releasing it from the waveguide as the exit pupil.

**11.** An aircraft or vehicle comprising a transparent canopy or windshield, a seat for an occupant, and a projection display as claimed in any of the preceding claims, wherein the combiner is located to allow an occupant seated in the seat to see an outside world scene through the combiner with an image generated by the display overlaying the outside world scene.

FIG. 1

FIG. 2

FIG. 3

FIG. 5

31

34

Inset B

25

26

24

20

22

Inset A

θ

Front view

y
x

34

18

20

61

Side view

y
z

18

61

Top view

z
x

FIG. 4

Europäisches
Patentamt

European
Patent Office

Office européen
des brevets

**EUROPEAN SEARCH REPORT**

Application Number

EP 11 27 5062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X <br> Y | WO 2005/124427 A1 (LUMUS LTD [IL])) <br> 29 December 2005 (2005-12-29) <br> * abstract * <br> * page 5, line 12 * <br> * page 7, paragraph 2, lines 15-18 * <br> * page 10, last line; figure 6 * <br> * page 15; figure 11 * <br> ----- | 1,3,4, 6-11 <br> 2,5 | INV. <br> G02B27/01 <br> G02B6/42 |
| Y,D | WO 2007/029032 A1 (BAE SYSTEMS PLC [GB]; SIMMONDS MICHAEL [GB]; VALERA MOHMED [GB]) <br> 15 March 2007 (2007-03-15) <br> * page 3, line 23 - page 4, line 2 * <br> * page 8, line 24 - line 27 * <br> ----- | 2,5 | |
| A,D | WO 2007/029034 A1 (BAE SYSTEMS PLC [GB]; SIMMONDS MICHAEL [GB]; HOWARD RICHARD [GB]) 15 March 2007 (2007-03-15) <br> ----- | 1 | |
| A,D | WO 2010/119240 A1 (BAE SYSTEMS PLC [GB]; VALERA MOHMED SALIM [GB]; SIMMONDS MICHAEL DAVID) 21 October 2010 (2010-10-21) <br> ----- | 1 | |

TECHNICAL FIELDS
SEARCHED (IPC)

G02B

The present search report has been drawn up for all claims

| Place of search | Date of completion of the search | Examiner |
|---|---|---|
| The Hague | 2 January 2012 | Soulaire, Denis |

EPO FORM 1503 03.82 (P04C01)

**ANNEX TO THE EUROPEAN SEARCH REPORT
ON EUROPEAN PATENT APPLICATION NO.**            EP 11 27 5062

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2012

| Patent document cited in search report | | Publication date | Patent family member(s) | | Publication date |
|---|---|---|---|---|---|
| WO 2005124427 | A1 | 29-12-2005 | EP<br>US<br>WO | 1756647 A1<br>2009279180 A1<br>2005124427 A1 | 28-02-2007<br>12-11-2009<br>29-12-2005 |
| WO 2007029032 | A1 | 15-03-2007 | US<br>WO | 2009190222 A1<br>2007029032 A1 | 30-07-2009<br>15-03-2007 |
| WO 2007029034 | A1 | 15-03-2007 | AT<br>EP<br>EP<br>US<br>WO | 447726 T<br>1922580 A1<br>2128682 A2<br>2008285137 A1<br>2007029034 A1 | 15-11-2009<br>21-05-2008<br>02-12-2009<br>20-11-2008<br>15-03-2007 |
| WO 2010119240 | A1 | 21-10-2010 | CA<br>WO | 2758633 A1<br>2010119240 A1 | 21-10-2010<br>21-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007029032 A
- WO 2007029034 A
- WO 2010119240 A